# EUROPEAN PATENT SPECIFICATION

(11) **EP 2 123 521 B1**
(45) Date of publication and mention of the grant of the patent: **15.06.2011**
(21) Application number: 09006764.6
(22) Date of filing: 19.05.2009
(51) Int. Cl.: B60R 25/04

(54) **Theft prevention systems for motorcycles**
Diebstahlsicherungssystem für Motorräder
Systèmes antivol pour motocyclettes

(30) Priority: 20.05.2008 JP 2008131602
(43) Date of publication of application: 25.11.2009
(73) Proprietor: Yamaha Motor Electronics Co., Ltd., Shuchi-gun Shizuoka 437-0292 (JP)
(72) Inventor: Tsuji, Mitsuru, 1450-6 Mori Mori-machi Schuchi-gun Shizuoka 437-0292 (JP)
(74) Representative: Schoppe, Fritz

(56) References cited:
- EP-A- 0 523 602
- EP-A- 0 604 981
- EP-A- 0 654 383
- EP-A- 1 067 028
- US-A1- 2006 131 959

## Description

### BACKGROUND OF THE INVENTION

### Field of the Invention

The present invention relates to a theft prevention system that prevents theft of a transport apparatus and a transport apparatus including the same.

### Description of the Background Art

There have been developed various theft prevention systems for preventing theft of vehicles by performing user authentication as to whether a user is an owner of an authorized ID (identifier).

The theft prevention system includes a transponder (wireless ID tag) that can be carried by the user and an ID comparing device provided in the vehicle, for example. An ID code is sent from the transponder to the ID comparing device through LF (Low Frequency) communication using radio waves of low frequencies (134 kHz, for example). A range of the LF communication is as narrow as about several centimeters. Therefore, the transponder is normally provided in a key.

When the user inserts and turns the key in a keyhole to bring a main switch into an ON state, the ID comparing device transmits radio waves. Upon receipt of the radio waves, the transponder sends the ID code to the ID comparing device. The ID comparing device compares the received ID code with the authorized ID. When the received ID code does not agree with the authorized ID, an engine cannot be started.

In an unauthorized drive prevention device described in JP 2001-18753 A, a voltage of a power generator is increased by starting the engine of the vehicle to cause the ID comparing device to operate. This causes query radio waves to be transmitted from the ID comparing device. Upon receipt of the query radio waves, the transponder sends the ID code to the ID comparing device. When the ID code received by the ID comparing device does not agree with the authorized ID, the engine is stopped.

As described above, such a cumbersome operation as inserting and turning the key in the keyhole or starting the engine is needed for the ID comparing device to start authentication operation.

EP 1 067 028 A2 describes a security apparatus for a vehicle. In a vehicle for making it possible to start its engine by checking an ID for validity based on a wireless ID tag (transponder), an ID check unit of the vehicle is caused again to check the ID for validity by transmitting and receiving to and from the wireless ID tag at a predetermined point in time after the engine is started. If the valid ID is not recognized at the point in time, it is made impossible to drive the vehicle with the started engine under the control of the ID check unit.

### SUMMARY OF THE INVENTION

An object of the present invention is to provide a theft prevention system that can quickly perform user authentication without a need for a complicated operation by a user and a transport apparatus including the same.

This object is achieved by a system according to claim 1 and a transport apparatus according to claim 8.
(1) According to an aspect of the present invention, a theft prevention system for preventing theft of a transport apparatus includes an authentication device to be provided in the transport apparatus, a portable member that can be carried by a user, a magnet provided in the portable member, and a transponder, wherein the authentication device includes a magnetic force detector that detects a magnetic force generated by the magnet, an oscillator that transmits radio waves when the magnetic force is detected by the magnetic force detector, and an identification information authenticator, the transponder receives the radio waves transmitted from the oscillator of the authentication device to transmit identification information, and the identification information authenticator performs authentication operation based on the identification information transmitted by the transponder.
   In the theft prevention system, the authentication device is provided in the transport apparatus, and the portable member is carried by the user. The magnet is provided in the portable member. When the user moves the portable member close to the magnetic force detector of the authentication device, the magnetic force generated by the magnet is detected by the magnetic force detector. This causes the oscillator to transmit the radio waves. When the radio waves are received by the transponder, the identification information is transmitted by the transponder. The authentication operation is performed by the identification information authenticator based on the identification information transmitted by the transponder.
   As described above, the user moves the magnet provided in the portable member close to the magnetic force detector of the authentication device provided in the transport apparatus, so that the authentication operation is performed by the authentication device. Thus, user authentication can be quickly performed without a need for a complicated operation by the user. In addition, a power supply need not be provided in the portable member, thus not increasing the weight of the portable member. As a result, a burden on the user can be reduced while theft of the transport apparatus can be prevented.
(2) The magnetic force detector may include a Hall element. In this case, it is possible to easily detect that the magnet has been moved close based on change in an output voltage of the Hall element.
(3) The magnetic force detector may include a magneto-resistive element. In this case, it is possible to easily detect that the magnet has been moved close based on change in resistance of the magneto-resistive element.
(4) The transponder may be provided in the portable member, the oscillator of the authentication device may include an oscillation element and an antenna that radiates an output of the oscillation element as the radio waves, and the antenna may be arranged in the transport apparatus such that communication of the radio waves and the identification information can be performed between the antenna and the transponder while the magnetic force generated by the magnet is detected by the magnetic force detector.
   In this case, when the user moves the portable member close to the magnetic force detector of the authentication device, communication of the radio waves and the identification information is performed between the antenna of the authentication device and the transponder provided in the portable member. Therefore, when the magnetic force generated by the magnet is detected by the magnetic force detector, the output of the oscillation element is radiated from the antenna as the radio waves. Upon receipt of the radio waves, the transponder transmits the identification information. Then, the authentication operation is performed by the identification information authenticator based on the identification information transmitted by the transponder.
   In this manner, the user moves the portable member close to the magnetic force detector of the authentication device, so that the authentication operation is quickly performed by the authentication device. In addition, a distance between the antenna and the transponder is shortened, thus allowing transmission and receipt of the radio waves and the identification information between the antenna and the transponder through low frequency communication. Accordingly, power consumption in the authentication device is reduced.
(5) The transponder may include a coil that receives the radio waves transmitted from the oscillator of the authentication device, a capacitor that is charged by an induced current of the coil, and an identification information transmitter that is driven by power charged in the capacitor and transmits the identification information.
   In this case, when the coil of the transponder receives the radio waves transmitted from the oscillator of the authentication device, the capacitor is charged by the induced current of the coil. Power charged in the capacitor causes the identification information transmitter to be driven, allowing the identification information to be transmitted. As described above, the transponder has the simple configuration, and thus can be reduced in size and weight.
(6) The authentication device may be driven by a power supply of the transport apparatus. In this case, a power supply need not be added for operating the authentication device.
(7) The portable member may be attachable to the user's body, and the magnetic force detector may be provided in an operation member for operating the transport apparatus.
   In this case, since the magnet of the portable member is moved close to the magnetic force detector of the authentication device when the user operates the operation member of the transport apparatus, the user need not perform a special operation for starting the authentication operation. This further reduces the burden on the user.
(8) According to another aspect of the present invention, a transport apparatus includes a main body, a driver that causes the main body to move, and a theft prevention system that prevents theft, wherein the theft prevention system includes an authentication device provided in the transport apparatus, a portable member that can be carried by a user, a magnet provided in the portable member, and a transponder, wherein the authentication device includes a magnetic force detector that detects a magnetic force generated by the magnet, an oscillator that transmits radio waves when the magnetic force is detected by the magnetic force detector, and an identification information authenticator, the transponder receives the radio waves transmitted from the oscillator of the authentication device to transmit identification information, and the identification information authenticator performs authentication operation based on the identification information transmitted by the transponder, and prevents operation of the driver when authentication is unsuccessful.

In the transport apparatus, the main body is moved by the driver. Moreover, the theft prevention system is provided.

In the theft prevention system, the authentication device is provided in the transport apparatus, and the portable member is carried by the user. The magnet is provided in the portable member. When the user moves the portable member close to the magnetic force detector of the authentication device, the magnetic force generated by the magnet is detected by the magnetic force detector. This causes the oscillator to transmit the radio waves. When the radio waves are received by the transponder, the identification information is transmitted by the transponder. The authentication operation is performed by the identification information authenticator based on the identification information transmitted by the transponder. When the authentication is unsuccessful, operation of the driver is prevented.

As described above, the user moves the magnet provided in the portable member close to the magnetic force detector of the authentication device provided in the transport apparatus, so that the authentication operation is performed by the authentication device. Thus, user authentication can be quickly performed without a need for a complicated operation by the user. In addition, a power supply need not be provided in the portable member, thus not increasing the weight of the portable member. As a result, a burden on the user can be reduced while theft of the transport apparatus can be prevented.

### BRIEF DESCRIPTION OF THE DRAWINGS

Fig. 1 is a side view of a motorcycle including a theft prevention system according to an embodiment of the present invention.
Fig. 2 is a plan view of part of the motorcycle of Fig. 1.
Fig. 3 is a schematic view showing a transmission device and an authentication device of the theft prevention system according to the embodiment.
Fig. 4 is a block diagram showing the configuration of the theft prevention system according to the embodiment.
Fig. 5 is a flowchart showing operation of the authentication device of the theft prevention system according to the embodiment.

### DESCRIPTION OF THE PREFERRED EMBODIMENTS

The embodiments of the present invention will be described referring to the drawings. In description of the following embodiments, a theft prevention system according to the present invention is applied to a motorcycle as an example of a transport apparatus.

### (1) Configurations of Theft Prevention System and Motorcycle

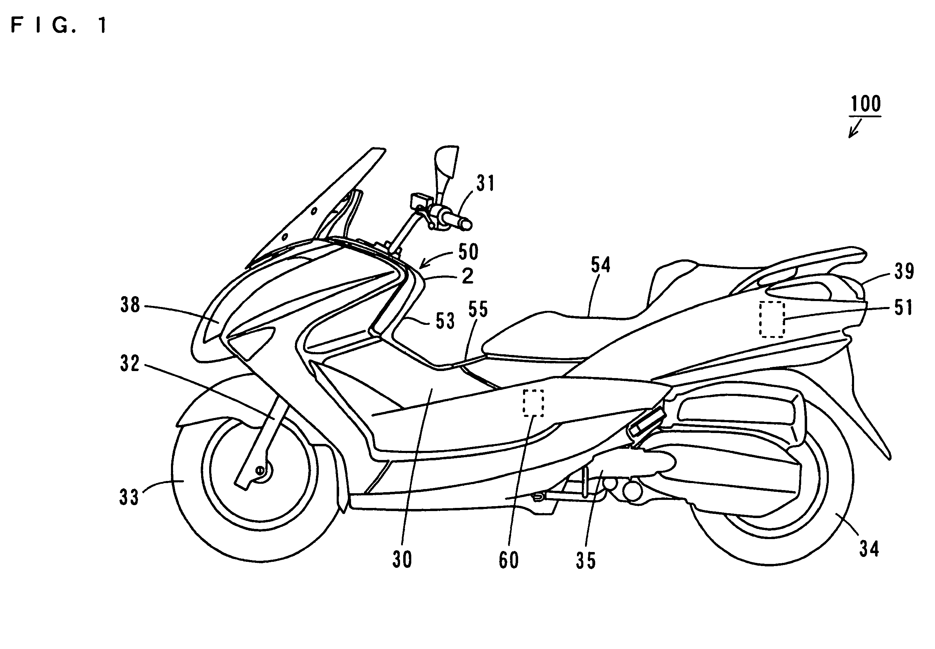

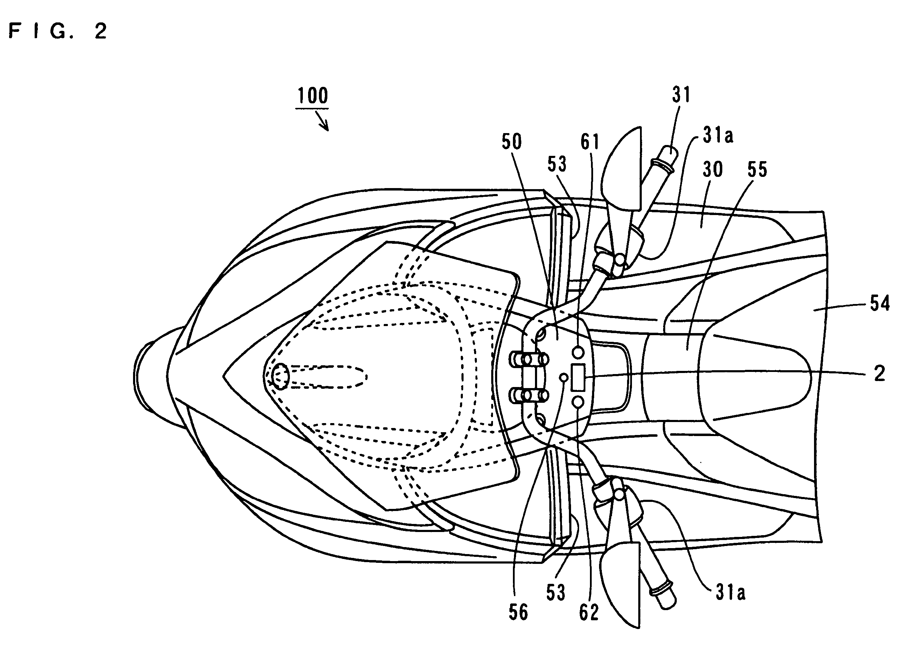

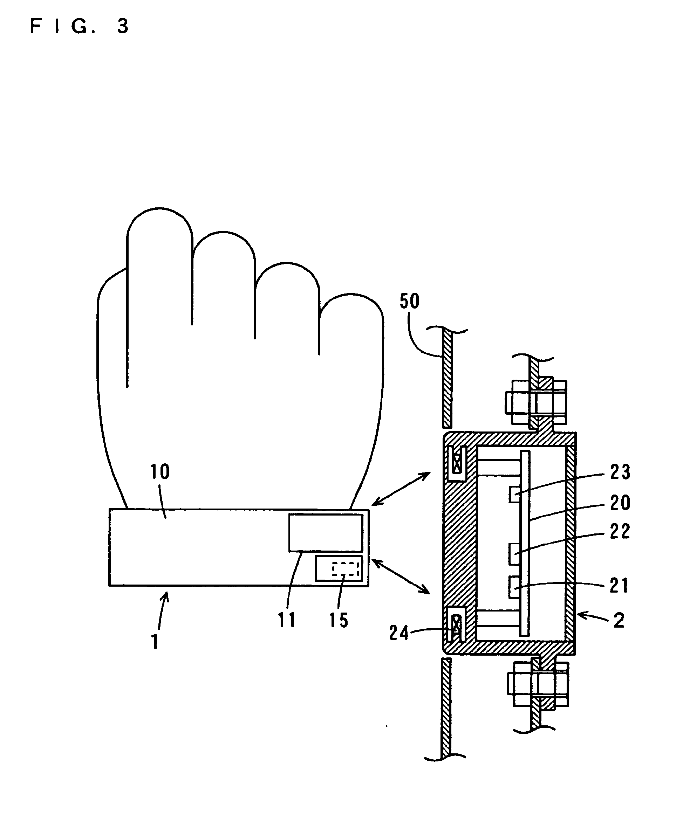

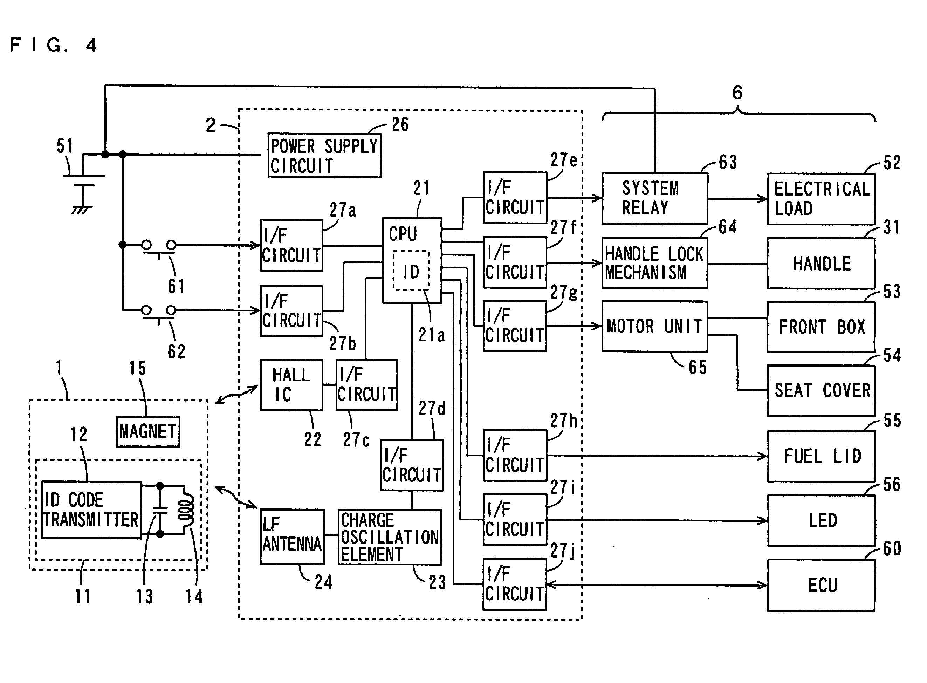

Fig. 1 is a side view of the motorcycle including the theft prevention system according to the embodiment of the present invention, and Fig. 2 is a plan view of part of the motorcycle of Fig. 1. Fig. 3 is a schematic view showing a transmission device and an authentication device of the theft prevention system according to the embodiment. Fig. 4 is a block diagram showing the configuration of the theft prevention system according to the embodiment.

The motorcycle 100 shown in Fig. 1 includes a vehicle body 30 composed of a vehicle body frame and a frame cover. A head pipe (not shown) is provided at the front of the vehicle body 30, and a handle 31 is provided at an upper end of the head pipe. A front fork 32 is attached to a lower end of the head pipe. In this state, the front fork 32 can be rotated within a predetermined angular range with an axial center of the head pipe as the center. A front wheel 33 is rotatably supported at a lower end of the front fork 32. A rear wheel 34 is rotatably supported at the rear of the vehicle body 30. An ECU (Electronic Control Unit) 60 and an engine 35 are provided at the center of the vehicle body 30. The rear wheel 34 is rotated by a torque of the engine 35.

The vehicle body 30 has a head light 38 attached at its front end and a tail light 39 attached at its rear end.

A switching panel 50 is provided below the center of the handle 31. A front box 53 having a lid that can be opened and closed is provided at a position of the vehicle body 30 below the handle 31, and a seat cover 54 is attached to be opened and closed at the an upper center of the vehicle body 30. A fuel lid 55 is provided at a position of the vehicle body 30 in front of the seat cover 54. A battery 51 is incorporated in the rear of the vehicle body 30.

As shown in Fig. 2, the authentication device 2 is provided in the switching panel 50, and a box switch 61 and a seat cover switch 62 are provided on both sides of the authentication device 2, respectively. An LED (Light Emitting Diode) 56 is provided near the authentication device 2. A handle switch 31 a is provided at the handle 31. A starter switch and other switches are provided in the handle switch 31 a.

As shown in Fig. 3, the theft prevention system is composed of a transmission device 1 and the authentication device 2.

The transmission device 1 includes a portable member 10 that is attachable to a user's arm, a chip-like transponder 11 and a magnet 15. The portable member 10 is an armlet, for example. The portable member 10 may be a card-like member, or a member that is similar to an accessory (a ring or a glove). The magnet 15 is a permanent magnet, for example. The transponder 11 has about 10 mm long, about 5 mm wide and about 3 mm height, for example. The internal configuration of the transponder 11 will be described later. The transponder 11 and the magnet 15 are attached to the portable member 10.

The authentication device 2 includes a printed circuit board 20, a CPU (Central Processing Unit) 21, a Hall IC (Integrated Circuit) 22 including a Hall element, a charge oscillation element 23 and LF (Low Frequency) antennas 24.

The authentication device 2 is fitted in the switching panel 50. The LF antennas 24 are arranged near a surface of the switching panel 50. The printed circuit board 20 is attached inside of the switching panel 50. The CPU 21, the Hall IC 22 and the charge oscillation element 23 are mounted on the printed circuit board 20.

As shown in Fig. 4, the transponder 11 of the transmission device 1 includes an ID code transmitter 12, a capacitor 13 and a coil 14.

The authentication device 2 includes the CPU 21, the Hall IC 22, the charge oscillation element 23, the LF antennas 24, a power supply circuit 26 and a plurality of I/F (interface) circuits 27a to 27j.

The power supply circuit 26 is connected to the battery 51. The power supply circuit 26 supplies power from the battery 51 to the CPU 21, the Hall IC 22 and the charge oscillation element 23.

The CPU 21 incorporates a memory 21a that stores an authorized ID code. The CPU 21 is connected to the battery 51 through the I/F circuit 27a and the box switch 61, and connected to the battery 51 through the I/F circuit 27b and the seat cover switch 62. The CPU 21 is connected to the Hall IC 22 through the I/F circuit 27c and connected to the charge oscillation element 23 through the I/F circuit 27d. The LF antennas 24 are connected to the charge oscillation element 23.

The CPU 21 is connected to a system relay 63 through the I/F circuit 27e, connected to a handle lock mechanism 64 through the I/F circuit 27f, and connected to a motor unit 65 through the I/F circuit 27g. The system relay 63 is connected to an electrical load 52. The electrical load 52 includes the head light 38, the tail light 39 of Fig. 1, a brake lamp, a winker and so on, for example.

Furthermore, the CPU 21 is connected to the fuel lid 55 through the I/F circuit 27h, connected to the LED 56 through the I/F circuit 27i, and connected to the ECU 60 through the I/F circuit 27j. Power is supplied from the battery 51 to the ECU 60. The CPU 21 and the ECU 60 communicate with each other.

The system relay 63, the handle lock mechanism 64, the motor unit 65, the electrical load 52, the handle 31, the front box 53, the seat cover 54, the fuel lid 55, the LED 56 and the ECU 60 constitute a functional unit 6. Operation of the functional unit 6 is permitted or prevented based on a result of user authentication by the theft prevention system.

### (2) Operation of the Theft Prevention System

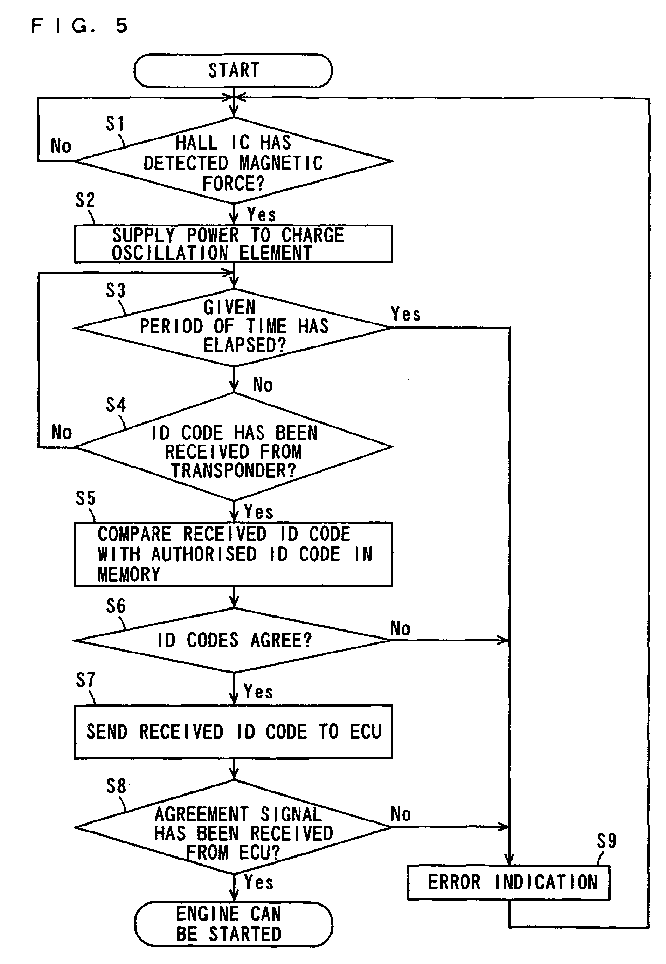

Fig. 5 is a flowchart showing operation of the authentication device of the theft prevention system according to the present embodiment. Next, description is made of the operation of the theft prevention system according to the present embodiment referring to Figs. 3 to 5.

A driver moves the magnet 15 of the transmission device 1 close to the Hall IC 22 of the authentication device 2. Thus, an output voltage of the Hall IC 22 is changed by a magnetic force generated from the magnet 15. The CPU 21 determines whether the Hall IC 22 has detected the magnetic force based on the output voltage of the Hall IC 22 (Step S1).

When the Hall IC 22 has detected the magnetic force, the CPU 21 causes power to be supplied from the power supply circuit 26 to the charge oscillation element 23 (Step S2). Accordingly, the charge oscillation element 23 performs oscillation to cause charging radio waves to be transmitted from the LF antennas 24.

When the transponder 11 of the transmission device 1 receives the radio waves transmitted from the LF antennas 24, an induced current flows to the coil 14 in the transponder 11 to cause the capacitor 13 to be charged. Thus, the ID code transmitter 12 in the transponder 11 is operated by power supplied from the capacitor 13. That is, the capacitor 13 functions as a power source of the ID code transmitter 12. The ID code transmitter 12 transmits a preset ID code.

In this case, the transponder 11 is close to the LF antennas 24 of the authentication device 2. Accordingly, the ID code transmitted by the ID code transmitter 12 is received by the LF antennas 24 of the authentication device 2. The radio waves and the ID code are transmitted and received through LF communication between the LF antennas 24 of the authentication device 2 and the transponder 11 of the transmission device 1.

The CPU 21 determines whether a given period of time has elapsed since the power supply to the charge oscillation element 23 has started (Step S3). When the given period of time has not elapsed, the CPU 21 determines whether the ID code has been received from the transponder 11 (Step S4).

When the ID code has not been received from the transponder 11, the CPU 21 returns to the process of Step S3 and waits until receiving the ID code from the transponder 11.

When the ID code is received from the transponder 11, the CPU 21 starts the user authentication, compares the received ID code with the authorized ID code stored in the memory 21a (Step S5) and determines whether the received ID code and the authorized ID code agree with each other (Step S6).

When the received ID code and the authorized ID code agree with each other, the CPU 21 sends the received ID code to the ECU 60 (Step S7). The ECU 60 compares the ID code received from the CPU 21 with the authorized ID code stored in advance. The ECU 60 sends an agreement signal to the CPU 21 when the received ID code and the authorized ID code agree with each other, and sends a disagreement signal to the CPU 21 when the received ID code and the authorized ID code do not agree with each other.

The CPU 21 determines whether the agreement signal has been received from the ECU 60 (Step S8). When the agreement signal is received from the ECU 60, the CPU 21 determines that the user authentication is successful.

In this case, the CPU 21 turns on the system relay 63; that is, turns on a main switch. This causes power to be supplied from the battery 51 to the electrical load 52. In addition, power is supplied from the battery 51 to the handle lock mechanism 64. This causes the handle 31 locked by the handle lock mechanism 64 to be released. As a result, the user can operate the handle 31.

Furthermore, the user presses the box switch 61 to cause power to be supplied from the battery 51 to the motor unit 65. This causes the front box 53 to be opened by the motor unit 65. In addition, the user presses the seat cover switch 62 to cause power to be supplied from the battery 51 to the motor unit 65. This causes the seat cover 54 to be opened by the motor unit 65. The user keeps pressing the seat cover switch 62 for a given period of time to cause power to be supplied from the battery 51 to the fuel lid 55. This causes the fuel lid 55 to be opened.

Moreover, the CPU 21 sets the ECU 60 such that ignition control of the engine 35 can be performed. In addition, the CPU 21 sets the ECU 60 such that the engine 35 can be started by the starter switch. Accordingly, the user can start the engine 35 by operating the starter switch.

The CPU 21 causes the LED 56 to light up or blink in a predetermined manner or with a predetermined color. This allows the user to recognize that the user authentication is successful.

The CPU 21 causes the LED 56 to blink or light up in a predetermined manner to perform error indication (Step S9) in cases where the given period of time has elapsed in Step S3, the received ID code and the authorized ID code do not agree with each other in Step S6, and the disagreement signal is received from the ECU 60 in Step S8. This causes the user to recognize that the user authentication is unsuccessful.

In this manner, the authorized user can drive the motorcycle 100 by operating various parts of the motorcycle 100.

In the above-described case, the user authentication is performed by the ID code comparison by the CPU 21 and the ID code comparison by the ECU 60. This improves theft prevention effects.

When the user desires to open the front box 53 without starting the engine 35, the user presses the box switch 61 and then moves the transponder 11 close to the LF antennas 24. This causes the foregoing user authentication to be performed regardless of the magnet 15. When the user authentication is successful, the front box 53 is opened by the motor unit 65.

Similarly, when the user desires to open the seat cover 54 without starting the engine 35, the user presses the seat cover switch 62 and then moves the transponder 11 close to the LF antennas 24. This causes the foregoing user authentication to be performed regardless of the magnet 15. When the user authentication is successful, the seat cover 54 is opened by the motor unit 65.

While the seat cover switch 62 is also used as a switch for opening the fuel lid 55 in the present embodiment, a fuel lid switch may be separately provided. In the case, the foregoing user authentication is performed when the user presses the fuel lid switch, and the fuel lid 55 is opened when the user authentication is successful.

### (3) Effects of the Theft Prevention System

In the theft prevention system according to the present embodiment, the user moves the magnet 15 provided in the portable member 10 close to the Hall IC 22 of the authentication device 2 provided in the switching panel 50 of the motorcycle 100, so that authentication operation is started by the authentication device 2. Accordingly, the user authentication can be quickly performed with no need for a complicated operation by the user. In addition, a power supply need not be provided in the portable member 10, thus not increasing the weight of the portable member 10. As a result, a burden on the user can be reduced and theft of the transport apparatus can be prevented.

In addition, the transponder 11 provided in the portable member 10 comes close to the LF antennas 24 of the authentication device 2 when the user moves the portable member 10 close to the authentication device 2. Accordingly, the authentication operation is quickly performed by the authentication device 2. Moreover, the radio waves and the ID code can be transmitted and received through the LF communication while the transponder 11 is close to the LF antennas 24. This reduces power consumption in the authentication device 2.

Furthermore, the transponder 11 has the simple configuration, and thus can be reduced in size and weight.

Moreover, since the authentication device 2 is driven by the battery 51 of the motorcycle 100, a power supply need not be added for operating the authentication device 2.

Since the portable member 10 is attached to the user's arm and the Hall IC 22 is provided in the switching panel 50 of the motorcycle 100, the user need not perform a special operation for starting the authentication operation. This further reduces the burden on the user.

### (4) Other Embodiments

(a) While the Hall IC 22 including the Hall element is used as a magnetic force detector in the foregoing embodiment, the present invention is not limited to this. For example, a magneto-resistive element may be used as the magnetic force detector. In this case, the magnetic force generated by the magnet 15 can be detected by detecting change in resistance of the magneto-resistive element.
(b) While the battery 51 is used as the power supply of the authentication device 2 in the foregoing embodiment, the present invention is not limited to this. For example, a power generator provided in the transport apparatus may be used as the power supply of the authentication device 2.
(c) The theft prevention system is applied to the saddle-straddling type motorcycle 1 as an example of the transport apparatus in the foregoing embodiment, the present invention is not limited to this. The theft prevention system may be applied to various other saddle-straddling type transport apparatuses.

The theft prevention system can be applied to various transport apparatuses such as a three-wheeled motor vehicle, a four-wheeled motor vehicle and a ship.

### (5) Correspondences between Elements in the Claims and Parts in Embodiments

In the following paragraphs, non-limiting examples of correspondences between various elements recited in the claims below and those described above with respect to various embodiments of the present invention are explained.

In the foregoing embodiments, the portable member 10 is an example of a portable member, the magnet 15 is an example of a magnet, the transponder 11 is an example of a transponder, the authentication device 2 is an example of an authentication device, the Hall IC 22 or the magneto-resistive element is an example of a magnetic force detector, the charge oscillation element 23 is an example of an oscillator, the CPU 21 is an example of an identification information authenticator, and the ID code is an example of identification information.

The charge oscillation element 23 is an example of an oscillation element, the LF antenna 24 is an example of an antenna, the coil 14 is an example of a coil, the capacitor 13 is an example of a capacitor, and the ID code transmitter 12 is an example of an identification information transmitter.

Furthermore, the motorcycle 100 is an example of a transport apparatus, the battery 51 is an example of a power supply, the vehicle body 30 is an example of a main body, and the engine 35 and the rear wheel 34 are examples of a driver.

As each of various elements recited in the claims, various other elements having configurations or functions described in the claims can be also used.

## Claims

1. A theft prevention system for preventing theft of a transport apparatus (100), comprising:
an authentication device (2) to be provided in the transport apparatus (100);
a portable member (10) that can be carried by a user; and
a transponder (11), wherein
the authentication device (2) includes
an oscillator (23, 24) that transmits radio waves, and
an identification information authenticator (21),
the transponder (11) receives the radio waves transmitted from the oscillator (23, 24) of the authentication device (2) to transmit identification information, and
the identification information authenticator (21) performs authentication operation based on the identification information transmitted by the transponder (11);
**characterized in that**
a magnet (15) is provided in the portable member (10);
the authentication device (2) includes a magnetic force detector (22) that detects a magnetic force generated by the magnet (15); and
the oscillator (23, 24) of the authentication device (2) transmits radio waves when the magnetic force is detected by the magnetic force detector (22).

2. The theft prevention system according to claim 1, wherein the magnetic force detector (22) includes a Hall element.

3. The theft prevention system according to claim 1, wherein the magnetic force detector (22) includes a magneto-resistive element.

4. The theft prevention system according to claim 1, wherein
the transponder (11) is provided in the portable member (10),
the oscillator of the authentication device (2) includes an oscillation element (23) and an antenna (24) that radiates an output of the oscillation element as the radio waves, and
the antenna (24) is arranged in the transport apparatus (100) such that communication of the radio waves and the identification information can be performed between the antenna (24) and the transponder (11) while the magnetic force generated by the magnet (15) is detected by the magnetic force detector (22).

5. The theft prevention system according to claim 1, wherein the transponder (11) includes
a coil (14) that receives the radio waves transmitted from the oscillator (23, 24) of the authentication device (2),
a capacitor (13) that is charged by an induced current of the coil (14), and
an identification information transmitter (12) that is driven by power charged in the capacitor (13) and transmits the identification information.

6. The theft prevention system according to claim 1, wherein the authentication device (2) is driven by a power supply (26) of the transport apparatus (100).

7. The theft prevention system according to claim 1, wherein the portable member (10) is attachable to the user's body.

8. A transport apparatus (100) comprising:
a main body (30);
a driver (35) that causes the main body (30) to move; and
a theft prevention system according to one of claims 1 to 7 that prevents theft, wherein the identification information authenticator (21) prevents operation of the driver (35) when authentication is unsuccessful.

## Patentansprüche

1. Ein Diebstahlsicherungssystem zum Verhindern eines Diebstahls einer Transportvorrichtung (100), das folgende Merkmale aufweist:
eine Authentifizierungsvorrichtung (2), die in der Transportvorrichtung (100) bereitzustellen ist;
ein tragbares Bauglied (10), das von einem Benutzer getragen werden kann; und
einen Transponder (11), wobei
die Authentifizierungsvorrichtung (2)
einen Oszillator (23, 24), der Funkwellen sendet, und
einen Kennungsinformationsauthentifikator (21)
umfasst,
der Transponder (11) die Funkwellen empfängt, die von dem Oszillator (23, 24) der Authentifizierungsvorrichtung (2) gesendet werden, um Kennungsinformationen zu senden, und
der Kennungsinformationsauthentifikator (21) einen Authentifizierungsvorgang auf Basis der durch den Transponder (11) gesendeten Kennungsinformationen durchführt;
**dadurch gekennzeichnet, dass**
ein Magnet (15) in dem tragbaren Bauglied (10) vorgesehen ist;
die Authentifizierungsvorrichtung (2) einen Magnetkraftdetektor (22) umfasst, der eine durch den Magneten (15) erzeugte Magnetkraft erfasst; und
der Oszillator (23, 24) der Authentifizierungsvorrichtung (2) Funkwellen sendet, wenn die Magnetkraft durch den Magnetkraftdetektor (22) erfasst wird.

2. Das Diebstahlsicherungssystem gemäß Anspruch 1, bei dem der Magnetkraftdetektor (22) ein Hall-Element umfasst.

3. Das Diebstahlsicherungssystem gemäß Anspruch 1, bei dem der Magnetkraftdetektor (22) ein magnetoresistives Element umfasst.

4. Das Diebstahlsicherungssystem gemäß Anspruch 1, bei dem
der Transponder (11) in dem tragbaren Bauglied (10) vorgesehen ist,
der Oszillator der Authentifizierungsvorrichtung (2) ein Oszillationselement (23) und eine Antenne (24), die eine Ausgabe des Oszillationselements als die Funkwellen abstrahlt, umfasst, und
die Antenne (24) so in der Transportvorrichtung (100) angeordnet ist, dass eine Kommunikation der Funkwellen und der Kennungsinformationen zwischen der Antenne (24) und dem Transponder (11) durchgeführt werden kann, während die durch den Magneten (15) erzeugte Magnetkraft durch den Magnetkraftdetektor (22) erfasst wird.

5. Das Diebstahlsicherungssystem gemäß Anspruch 1, bei dem der Transponder (11) Folgendes umfasst:
eine Spule (14), die die Funkwellen empfängt, die von dem Oszillator (23, 24) der Authentifizierungsvorrichtung (2) gesendet werden,
einen Kondensator (13), der durch einen induzierten Strom der Spule (14) geladen wird, und
einen Kennungsinformationssender (12), der durch in dem Kondensator (13) geladene Leistung angetrieben wird und die Kennungsinformationen sendet.

6. Das Diebstahlsicherungssystem gemäß Anspruch 1, bei dem die Authentifizierungsvorrichtung (2) durch eine Leistungsversorgung (26) der Transportvorrichtung (100) betrieben wird.

7. Das Diebstahlsicherungssystem gemäß Anspruch 1, bei dem das tragbare Bauglied (10) am Körper des Benutzers anbringbar ist.

8. Eine Transportvorrichtung (100), die folgende Merkmale aufweist:
einen Hauptkörper (30);
eine Antriebsvorrichtung (35), die bewirkt, dass der Hauptkörper (30) sich bewegt; und
ein Diebstahlsicherungssystem gemäß einem der Ansprüche 1 bis 7, das Diebstahl verhindert, wobei der Kennungsinformationsauthentifikator (21) einen Betrieb der Antriebsvorrichtung (35) verhindert, wenn eine Authentifizierung erfolglos ist.

## Revendications

1. Système antivol pour un appareil de transport (100), comprenant:
un dispositif d'authentification (2) destiné à être prévu dans l'appareil de transport (100);
un élément portable (10) qui peut être porté par un utilisateur; et
un transpondeur (11), dans lequel
le dispositif d'authentification (2) comporte
un oscillateur (23, 24) qui transmet des ondes hertziennes, et
un authentificateur d'informations d'identification (21),
le transpondeur (11) reçoit les ondes hertziennes transmises par l'oscillateur (23, 24) du dispositif d'authentification (2), pour transmettre les informations d'identification, et
l'authentificateur d'informations d'identification (21) effectue une opération d'authentification sur base des informations d'identification transmises par le transpondeur (11);
**caractérisé par le fait que**
un aimant (15) est prévu dans l'élément portable (10);
le dispositif d'authentification (2) comporte un détecteur de force magnétique (22) qui détecte une force magnétique générée par l'aimant (15); et
l'oscillateur (23, 24) du dispositif d'authentification (2) transmet des ondes hertziennes lorsque la force magnétique est détectée par le détecteur de force magnétique (22).

2. Système antivol selon la revendication 1, dans lequel le détecteur de force magnétique (22) comporte un élément de Hall.

3. Système antivol selon la revendication 1, dans lequel le détecteur de force magnétique (22) comporte un élément magnéto-résistant.

4. Système antivol selon la revendication 1, dans lequel le transpondeur (11) est prévu dans l'élément portable (10),
l'oscillateur du dispositif d'authentification (2) comporte un élément d'oscillation (23) et une antenne (24) qui rayonne une sortie de l'élément d'oscillation comme ondes hertziennes, et
l'antenne (24) est disposée dans l'appareil de transport (100) de sorte que la communication des ondes hertziennes et des informations d'identification puisse être effectuée entre l'antenne (24) et le transpondeur (11), tandis que la force magnétique générée par l'aimant (15) est détectée par le détecteur de force magnétique (22).

5. Système antivol selon la revendication 1, dans lequel le transpondeur (11) comporte une bobine (14) qui reçoit les ondes hertziennes transmises par l'oscillateur (23, 24) du dispositif d'authentification (2),
un condensateur (13) qui est chargé par un courant induit de la bobine (14), et
un émetteur d'informations d'identification (12) qui est piloté par le courant chargé dans le condensateur (13) et qui transmet les informations d'identification.

6. Système antivol selon la revendication 1, dans lequel le dispositif d'authentification (2) est piloté par une alimentation de courant (26) de l'appareil de transport (100).

7. Système antivol selon la revendication 1, dans lequel l'élément portable (10) peut être attaché au corps de l'utilisateur.

8. Appareil de transport (100), comprenant:
un corps principal (30);
un pilote (35) qui provoque le déplacement du corps principal (30); et
un système antivol selon l'une des revendications 1 à 7 qui empêche le vol, dans lequel
l'authentificateur d'informations d'identification (21) empêche le fonctionnement du pilote (35) lorsque l'authentification n'est pas fructueuse.
